# EUROPÄISCHE PATENTSCHRIFT

(11) **EP 3 065 976 B1**
(45) Veröffentlichungstag und Bekanntmachung des Hinweises auf die Patenterteilung: **10.10.2018**
(21) Anmeldenummer: 14796478.7
(22) Anmeldetag: 07.11.2014
(51) Int. Cl.: B60R 5/04

(54) **KLAPPE, INSBESONDERE KOFFERRAUMDECKEL FÜR EINEN KRAFTWAGEN, INSBESONDERE EINEN PERSONENKRAFTWAGEN**
FLAP, IN PARTICULAR FOR A TRUNK LID FOR A MOTOR VEHICLE, PARTICULAR FOR A PASSENGER VEHICLES
CLAPET DE COUVERTURE,NOTAMMENT POUR UN COUVERCLE DE COFFRE DESTINÉ À UN VÉHICULE AUTOMOBILE, NOTAMMENT DESTINÉ À UNE VOITURE PARTICULIÈRE

(30) Priorität: 07.11.2013 DE 102013222683
(43) Veröffentlichungstag der Anmeldung: 14.09.2016
(73) Patentinhaber: Bayerische Motoren Werke Aktiengesellschaft, 80809 München (DE)
(72) Erfinder: ALDERSLEY, Nicholas, 85241 Hebertshausen (DE)
(86) Internationale Anmeldenummer: PCT/EP2014/073997
(87) Internationale Veröffentlichungsnummer: WO 2015/067728

(56) Entgegenhaltungen:
- EP-A1- 2 210 781
- EP-A2- 1 057 697
- DE-A1- 19 619 164
- DE-B3-102007 039 097
- US-A1- 2004 155 483

## Beschreibung

Die Erfindung betrifft eine Klappe, insbesondere einen Kofferraumdeckel, für einen Kraftwagen, insbesondere einen Personenkraftwagen, gemäß dem Oberbegriff von Patentanspruch 1.

Derartige Klappen sind insbesondere in Form von Kofferraumdeckeln aus dem Serienfahrzeugbau hinlänglich bekannt. Bei einem solchen Kofferraumdeckel handelt es sich üblicherweise um einen Heckdeckel, welcher am Heck des Personenkraftwagens angeordnet ist. Der Kofferraumdeckel beziehungsweise Heckdeckel dient zum zumindest teilweisen Verschließen eines Stauraums des Personenkraftwagens, wobei der Stauraum üblicherweise auch als Kofferraum bezeichnet wird.

Die Klappe ist am Aufbau, insbesondere an der Karosserie, des Kraftwagens relativ zum Aufbau verschwenkbar gehalten und kann beispielsweise zwischen einer den Stauraum zumindest in einem Teilbereich verschließenden Schließstellung und wenigstens einer den Stauraum in dem Teilbereich freigebenden Offenstellung verschwenkt werden.

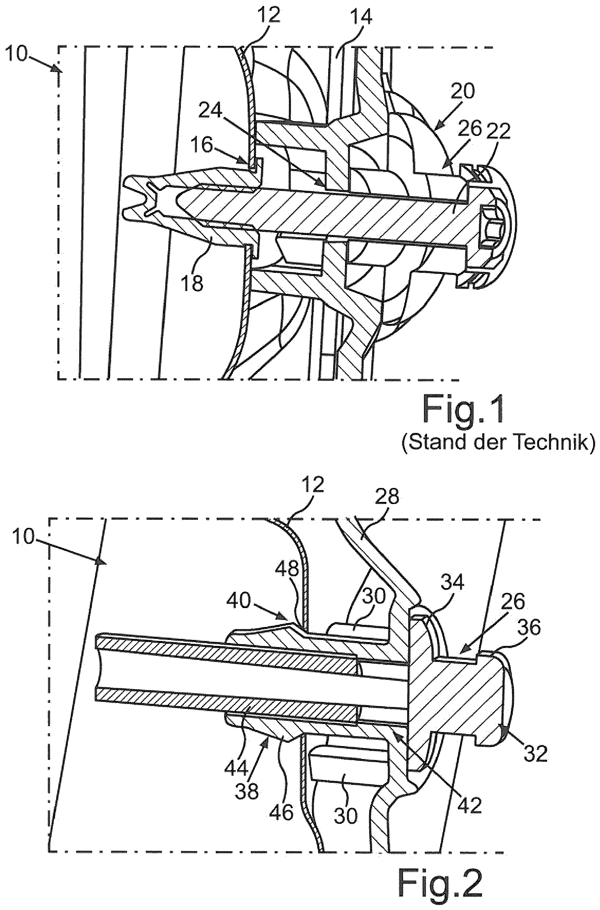

Fig. 1 zeigt in einer ausschnittsweisen, teilweise geschnittenen Perspektivansicht eine solche im Ganzen mit 10 bezeichnete Klappe in Form eines Heckdeckels gemäß dem Stand der Technik. Die Klappe 10 umfasst ein Rohbauteil 12, welches beispielsweise aus einem metallischen Werkstoff gebildet ist. Ferner umfasst die Klappe wenigstens ein am Rohbauteil 12 gehaltenes Verkleidungsteil 14. Mittels des Verkleidungsteils 14 ist das Rohbauteil 12 zumindest teilweise verkleidet. Das Rohbauteil 12 ist beispielsweise als Blechteil ausgebildet. Das Rohbauteil 12 weist eine Durchgangsöffnung 16 auf, in die eine Spreizmutter 18 eingesetzt ist. Am Verkleidungsteil 14 ist ein Befestigungselement 20 angeordnet, wobei das Befestigungselement 20 mittels einer Schraube 22 am Verkleidungsteil 14 befestigt ist. Die Schraube 22 durchdringt dabei das Befestigungselement 20, eine Durchgangsöffnung 24 des Verkleidungsteils 14 sowie die Durchgangsöffnung 16 und ist in die Spreizmutter 18 eingeschraubt.

Das Befestigungselement 20 weist eine Aufnahme 26 auf, in welcher ein Koppelelement zumindest teilweise anordenbar ist. Bei dem Koppelelement handelt es sich beispielsweise um ein Seil. Das Seil weist einenends eine Öse auf, mittels welcher das Seil in die Aufnahme 26 eingehängt und somit am Befestigungselement 20 befestigt werden kann. Andernends ist das Seil beispielsweise mit einem Abdeckelement in Form einer Hutablage des Kraftwagens gekoppelt beziehungsweise koppelbar. Die Hutablage ist dabei beispielsweise ebenfalls zwischen einer Schließstellung und wenigstens einer Offenstellung relativ zu dem Aufbau des Kraftwagens verschwenkbar, wobei ein Teilbereich des Stauraums in der Schließstellung der Hutablage durch diese überdeckt und in der Offenstellung der Hutablage freigegeben ist.

Wird nun beispielsweise die Klappe 10 aus ihrer Schließstellung in ihre Offenstellung verschwenkt, so geht damit aufgrund der Kopplung der Hutablage über das Seil mit der Klappe 10 ein Verschwenken der Hutablage aus deren Schließstellung in ihre Offenstellung einher. Mit anderen Worten ist die Hutablage über das Koppelelement (Seil) bei einer Bewegung der Klappe 10 mit dieser mitbewegbar.

Damit das Befestigungselement 20 die zum Bewegen der Hutablage erforderlichen Kräfte aufnehmen kann, ist das Befestigungselement 20 mittels der Schraube 22 und über die Spreizmutter 18 gegen das Rohbauteil 12 verschraubt. Wie aus Fig. 1 erkennbar ist, resultiert daraus jedoch eine hohe Teileanzahl und somit ein hohes Gewicht sowie eine aufwändige Montage.

Es ist daher Aufgabe der vorliegenden Erfindung, eine solche Klappe derart weiterzuentwickeln, dass diese Probleme vermieden werden können.

Diese Aufgabe wird durch eine Klappe mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Um eine Klappe, insbesondere einen Kofferraumdeckel, für einen Kraftwagen, insbesondere einen Personenkraftwagen, der im Oberbegriff des Patentanspruchs 1 angegebenen Art derart weiterzuentwickeln, dass sich eine Reduzierung des Gewichts, eine geringere Teileanzahl sowie eine einfachere Montage realisieren lassen, ist es erfindungsgemäß vorgesehen, dass das Verkleidungsteil wenigstens ein Aufnahmeelement umfasst, welches eine korrespondierende Aufnahmeöffnung des Rohbauteils durchragt. In dem Aufnahmeelement ist das einstückige Befestigungselement unter Fixierung des Verkleidungsteils über das Aufnahmeteil am Rohbauteil zumindest teilweise aufgenommen, wobei auch das Befestigungselement die Aufnahmeöffnung des Rohbauteils durchragt. Mit anderen Worten ist durch die Aufnahme des Befestigungselements im Aufnahmeelement beziehungsweise durch das Einbringen des Befestigungselements in das Aufnahmeelement, beispielsweise im Rahmen einer Montage, eine Fixierung des Verkleidungsteils am Rohbauteil geschaffen, in deren Rahmen das Verkleidungsteil über das Aufnahmeelement am Rohbauteil fixiert ist. Dies ist beispielsweise derart bewirkt, dass Wandungsbereiche des Aufnahmeelements durch das Befestigungselement nach außen gegen die Aufnahmeöffnung begrenzende Wandungsbereiche des Rohbauteils gedrückt sind.

Das Befestigungselement erfüllt somit zumindest eine Doppelfunktion. Einerseits dient es zum Befestigen des Koppelelements, so dass das Abdeckelement über das Befestigungselement und das Koppelelement mit der Klappe mitbewegt werden kann. Andererseits dient das Befestigungselement zum Fixieren des Verkleidungsteils am Rohbauteil. Durch die entsprechende Anordnung des Befestigungselements und die Fixierung des Verkleidungsteils am Rohbauteil kann das Befestigungselement Kräfte, die zum Bewegen des Abdeckelements erforderlich sind, besonders gut aufnehmen, abstützen und über das Aufnahmeelement beziehungsweise das Verkleidungsteil an das Rohbauteil besonders gut ableiten. Hierdurch können auch sehr hohe Kräfte schadfrei aufgenommen werden.

Bei einer besonders vorteilhaften Ausführungsform der Erfindung ist das Befestigungselement mit dem Verkleidungselement verrastet. Mit anderen Worten ist hierbei eine formschlüssige Verbindung des Befestigungselements mit dem Verkleidungselement vorgesehen. Durch diese Verrastung ist das Befestigungselement besonders fest am Verkleidungsteil gehalten, so dass es auch besonders hohe Kräfte aufnehmen kann, ohne dass es sich vom Verkleidungsteil löst.

Als besonders vorteilhaft hat es sich gezeigt, wenn das Verkleidungsteil über das Aufnahmeelement mit dem Rohbauteil formschlüssig und/oder kraftschlüssig verbunden ist. Dies bedeutet, dass es vorzugsweise vorgesehen ist, dass durch die Aufnahme des Befestigungselements in dem Aufnahmeelement eine formschlüssige und/oder kraftschlüssige Verbindung des Verkleidungsteils mit dem Rohbauteil bewirkt ist. Das Verkleidungsteil ist somit besonders fest am Rohbauteil gehalten, so dass auch besonders hohe Kräfte aufgenommen und abgestützt werden können, ohne dass es zu unerwünschten Relativbewegungen des Verkleidungsteils zum Rohbauteil kommt.

Zur Realisierung einer besonders stabilen Befestigung des Verkleidungsteils am Rohbauteil ist es bei einer weiteren Ausführungsform der Erfindung vorgesehen, dass das Aufnahmeteil wenigstens einen die Aufnahmeöffnung zumindest teilweise begrenzenden Wandungsbereich des Rohbauteils hintergreift. Hierzu weist das Aufnahmeelement beispielsweise einen hinterschnittigen Kragen auf, der das Rohbauteil durchragt und hintergreift.

Um das Gewicht der Klappe besonders gering zu halten, ist das Verkleidungselement vorzugsweise aus einem Kunststoff gebildet. Alternativ oder zusätzlich ist das Befestigungselement aus einem Kunststoff gebildet, so dass ein besonders geringes Gewicht realisiert werden kann.

Die Montage des Befestigungselements kann besonders einfach erfolgen, da es lediglich in das Aufnahmeelement eingebracht werden muss. Die Montage weiterer, separater Teile ist nicht vorgesehen und nicht erforderlich. Gleichzeitig kann das Koppelement besonders fest und stabil über das Befestigungselement am Verkleidungsteil befestigt werden.

Die Klappe ist erfindungsgemäß als Kofferraumdeckel, insbesondere als Heckdeckel, zum zumindest teilweisen Verschließen eines Stauraums, insbesondere eines Kofferraums, des Kraftwagens ausgebildet. Dadurch ist es beispielsweise möglich, dass über das Befestigungselement und das Koppelelement eine Hutablage als das Abdeckelement mit der Klappe mitbewegt werden kann.

Zur Erfindung gehört auch ein Kraftwagen, insbesondere ein Personenkraftwagen, mit einer erfindungsgemäßen Klappe. Vorteilhafte Ausgestaltungen der erfindungsgemäßen Klappe sind als vorteilhafte Ausgestaltungen des erfindungsgemäßen Kraftwagens anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ausschnittsweise eine schematische und geschnittene Perspektivansicht einer Klappe für einen Kraftwagen, mit einem Rohbauteil, mit einem an dem Rohbauteil gehaltenen Verkleidungsteil und mit einem am Verkleidungsteil angeordneten Befestigungselement, an welchem ein Koppelelement, über welches ein Abdeckelement des Kraftwagens bei einer Bewegung der Klappe mit dieser mitbewegbar ist, befestigbar ist;
- Fig. 2: ausschnittsweise eine schematische und geschnittene Perspektivansicht einer erfindungsgemäßen Klappe; und
- Fig. 3: ausschnittsweise eine schematische Schnittansicht der Klappe gemäß Fig. 2.

In den Figuren sind gleiche oder funktionsgleiche Elemente mit gleichen Bezugszeichen versehen.

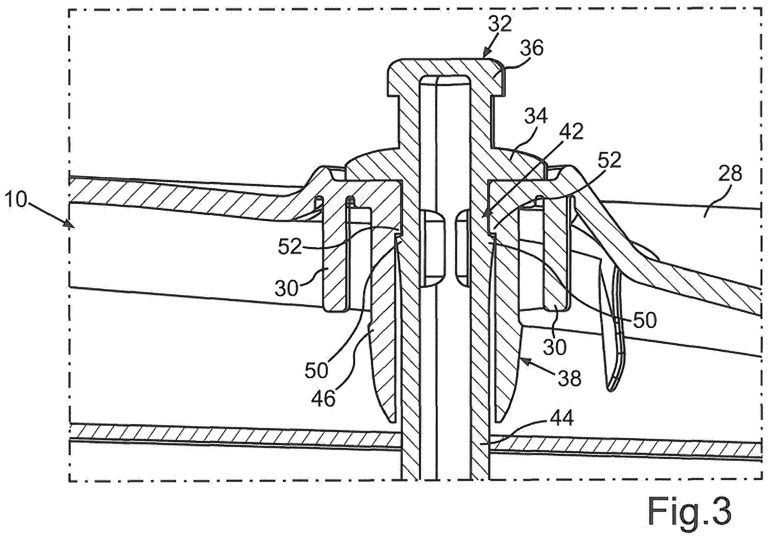

Fig. 2 zeigt eine Klappe 10 für einen Kraftwagen, insbesondere einen Personenkraftwagen. Das zur Klappe 10 gemäß Fig. 1 Geschilderte kann hinsichtlich ihrer Funktion ohne weiteres auf die Klappe 10 gemäß Fig. 2 und 3 übertragen werden. Bei der Klappe 10 kann es sich somit um einen Kofferraumdeckel, insbesondere einen Heckdeckel, handeln, welcher am Aufbau, insbesondere an der Karosserie, des Kraftwagens relativ zum Aufbau verschwenkbar gehalten ist. Die Klappe 10 dient beispielsweise zum Verschließen zumindest eines Teilbereichs eines Stauraums, insbesondere eines Kofferraums, des Kraftwagens und ist zwischen einer den Stauraum zumindest in einem Teilbereich verschließenden Schließstellung und wenigstens einer den Teilbereich freigebenden Offenstellung bewegbar.

Der Kraftwagen umfasst ferner ein Abdeckelement in Form einer Hutablage. Wie bereits zu Fig. 1 geschildert, ist die Hutablage beispielsweise ebenfalls zwischen einer Schließstellung und wenigstens einer Offenstellung relativ zum Aufbau verschwenkbar. Um die Hutablage mit der Klappe 10 beim Verschwenken dieser mit zu bewegen, ist wenigstens ein Koppelelement vorgesehen. Vorzugsweise sind wenigstens zwei seitliche Koppelelemente vorgesehen. Bei einem solchen Koppelelement handelt es sich beispielsweise um ein Seil, welches einerseits mit der Hutablage und andererseits mit der Klappe 10 verbunden ist.

Die Klappe 10 gemäß Fig. 2 und 3 umfasst ein Rohbauteil 12, welches beispielsweise aus einem metallischen Werkstoff gebildet ist. Das Rohbauteil 12 kann dabei als Blechteil ausgebildet sein. Alternativ ist es möglich, dass das Rohbauteil 12 aus einem faserverstärkten Kunststoff gebildet ist. Bei dem faserverstärkten Kunststoff kann es sich um kohlefaserverstärkten Kunststoff (CFK) handeln. Dabei kann das Rohbauteil 12 aus SMC (Sheet Molding Compund) oder aus BMC (Bulk Molding Compound) hergestellt sein. Ferner umfasst die Klappe 10 gemäß Fig. 2 und 3 ein Verkleidungsteil 28, mittels welchem das Rohbauteil 12 zumindest teilweise verkleidet ist. Das Verkleidungsteil 28 ist beispielsweise aus einem Kunststoff gebildet. Das Verkleidungsteil 28 umfasst Abstandshalteelemente 30, weiche sich in Stützanlage mit dem Rohbauteil 12 befinden und somit zumindest einen Teilbereich des Verkleidungsteils 28 in einem Abstand zu dem Rohbauteil 12 halten.

Die Klappe 10 umfasst auch wenigstens ein am Verkleidungsteil 28 angeordnetes Befestigungselement 32. An dem Befestigungselement 32 ist das genannte Koppelelement befestigbar, so dass die Hutablage insbesondere beim Öffnen der Klappe 10 über das Befestigungselement 32 und das Koppelelement mit der Klappe 10 mitbewegt wird.

Zu sicheren Halten des Koppelelements weist das Befestigungselement 32 eine Aufnahme 26 auf, welche in Längserstreckungsrichtung des Befestigungselements 32 durch einen ersten Bund 34 und durch einen zweiten Bund 36 des Befestigungselements 32 begrenzt ist. Wie aus Fig. 2 und 3 erkennbar ist, ist das Befestigungselement 32 über den Bund 34 am Verkleidungsteil 28 abgestützt.

Das Verkleidungsteil 28 weist ein Aufnahmeelement 38 auf, welches eine korrespondierende, als Durchgangsöffnung ausgebildete Aufnahmeöffnung 40 des Rohbauteils 12 durchdringt beziehungsweise durchragt. Das Aufnahmeelement 38 weist eine als Durchgangsöffnung ausgebildete Aufnahmeöffnung 42 auf, in welcher das Befestigungselement 32 teilweise aufgenommen ist. Wie aus Fig. 2 und 3 zu erkennen ist, durchragt ein Schaft 44 des Befestigungselements 32 die Aufnahmeöffnung 42. Ferner durchragt der Schaft 44 auch die als Durchgangsöffnung ausgebildete Aufnahmeöffnung 40 des Rohbauteils 12.

Das Aufnahmeelement 38 weist einen Kragen 46 auf, welcher als hinterschnittiger Kragen ausgebildet ist und einen die Aufnahmeöffnung 40 begrenzenden Wandungsbereich 48 des Rohbauteils 12 hintergreift. Dadurch ist eine formschlüssige Halterung des Verkleidungsteils 28 über das Aufnahmeelement 38 am Rohbauteil 12 geschaffen.

Das in der Aufnahmeöffnung 42 aufgenommene Befestigungselement 32 drückt die Aufnahmeöffnung 42 begrenzende Wandungen des Aufnahmeelements 38 in radialer Richtung nach außen gegen den Wandungsbereich 48, so dass sich der Kragen 46 nicht in radialer Richtung nach innen vom Wandungsbereich 48 weg bewegen und dadurch die Hintergreifung aufheben kann. Mit anderen Worten ist das einstückige, die Aufnahmeöffnung 40 durchragende und beispielsweise aus einem Kunststoff gebildete Befestigungselement 32 unter Fixierung des Verkleidungsteils 28 über das Aufnahmeelement 38 am Rohbauteil 12 zumindest teilweise in dem Aufnahmeelement 38 beziehungsweise der Aufnahmeöffnung 42 aufgenommen.

Im Rahmen der Montage der Klappe 10 wird das als einteiliger Aufnahmepin ausgebildete Befestigungselement 32 in das Verkleidungsteil 28 ein- beziehungsweise durch die Aufnahmeöffnung 42 hindurch gesteckt und mit dem Verkleidungsteil 28 verrastet. Dazu weist der Schaft 44 - wie besonders gut aus Fig. 3 erkennbar ist - Rastnasen 50 auf, welche korrespondierende, die Aufnahmeöffnung 42 begrenzende Wandungsbereiche 52 federnd hintergreifen. Das Befestigungselement 32 ist somit mit dem Verkleidungsteil 28 verrastet. Dadurch, dass das Befestigungselement 32 den Kragen 46 hinter den Wandungsbereich 48 drückt, ist durch das Befestigungselement 32 auch eine formschlüssige und/oder kraftschlüssige Verbindung des Verkleidungsteils 28 mit dem Rohbauteil 12 bewirkt. Hierdurch können Kräfte, welche von der Hutablage über das Koppelelement auf das Befestigungselement 32 übertragen werden, besonders gut vom Befestigungselement 32 an das Aufnahmeelement 38 und weiter an das Rohbauteil 12 abgeleitet werden. Hierdurch kann das Verkleidungsteil 28 mit einem nur sehr geringen Gewicht ausgestaltet werden, da die Last zumindest im Wesentlichen direkt in das Rohbauteil 12 abgeführt werden kann. Das Verkleidungsteil 28 wird nicht oder nur sehr geringfügig belastet, sondern vielmehr mitgetragen. Darüber hinaus ist eine sehr einfache, zeit- und kostengünstige Montage realisierbar, da das Befestigungselement 32 lediglich in das Aufnahmeelement 38 eingesteckt werden muss. Eine Montage weiterer, separater Bauteile ist nicht vorgesehen und nicht erforderlich.

### Bezugszeichenliste

- 10: Klappe
- 12: Rohbauteil
- 14: Verkleidungsteil
- 16: Durchgangsöffnung
- 18: Spreizmutter
- 20: Befestigungselement
- 22: Schraube
- 24: Durchgangsöffnung
- 26: Aufnahme
- 28: Verkleidungsteil
- 30: Abstandshalteelement
- 32: Befestigungselement
- 34: Bund
- 36: Bund
- 38: Aufnahmeelement
- 40: Aufnahmeöffnung
- 42: Aufnahmeöffnung
- 44: Schaft
- 46: Kragen
- 48: Wandungsbereich
- 50: Rastnase
- 52: Wandungsbereich

## Patentansprüche

1. Klappe (10) für einen Kraftwagen, mit wenigstens einem Rohbauteil (12), mit wenigstens einem am Rohbauteil (12) gehaltenen Verkleidungsteil (14, 28), mittels welchem das Rohbauteil (12) zumindest bereichsweise verkleidet ist, und mit wenigstens einem am Verkleidungsteil (14, 28) angeordneten Befestigungselement (20, 32), an welchem ein Koppelelement, über welches ein Abdeckelement des Kraftwagens bei einer Bewegung der Klappe (10) mit dieser mitbewegbar ist, befestigbar ist,
**dadurch gekennzeichnet, dass**
die Klappe (10) als Kofferraumdeckel, insbesondere als Heckdeckel, zum zumindest teilweisen Verschließen eines Stauraums des Kraftwagens ausgebildet ist, wobei das Verkleidungsteil (28) wenigstens ein eine korrespondierende Aufnahmeöffnung (40) des Rohbauteils (12) durchragendes Aufnahmeelement (38) umfasst, in welcher das einstückige und die Aufnahmeöffnung (40) durchragende Befestigungselement (32) unter Fixierung des Verkleidungsteils (28) über das Aufnahmeelement (38) am Rohbauteil (12) zumindest teilweise aufgenommen ist.

2. Klappe (10) nach Anspruch 1,
**dadurch gekennzeichnet, dass**
das Befestigungselement (32) mit dem Verkleidungsteil (28) verrastet ist.

3. Klappe (10) nach einem der Ansprüche 1 oder 2,
**dadurch gekennzeichnet, dass**
das Verkleidungsteil (28) über das Aufnahmeelement (38) mit dem Rohbauteil (12) formschlüssig und/oder kraftschlüssig verbunden ist.

4. Klappe (10) nach einem der vorhergehenden Ansprüche,
**dadurch gekennzeichnet, dass**
das Aufnahmeelement (38) wenigstens einen die Aufnahmeöffnung (40) zumindest teilweise begrenzenden Wandungsbereich (48) des Rohbauteils (12) hintergreift.

5. Klappe (10) nach einem der vorhergehenden Ansprüche,
**dadurch gekennzeichnet, dass**
das Verkleidungsteil (28) aus einem Kunststoff gebildet ist.

6. Klappe (10) nach einem der vorhergehenden Ansprüche,
**dadurch gekennzeichnet, dass**
das Befestigungselement (32) aus einem Kunststoff gebildet ist.

7. Kraftwagen, insbesondere Personenkraftwagen, mit einer Klappe (10) nach einem der vorhergehenden Ansprüche.

## Claims

1. A panel (10) for a motor vehicle, comprising at least one bodyshell component (12), comprising at least one trim component (14, 28) which is held on the bodyshell component (12) and by means of which at least some regions of the bodyshell component (12) are covered, and comprising at least one fastening element (20, 32) which is arranged on the trim component (14, 28) and to which a coupling element can be fastened, by means of which coupling element, when the panel (10) moves, a cover element of the motor vehicle can be moved together therewith,
**characterised in that**
the panel (10) is designed as a luggage compartment lid, in particular as a rear lid, which closes off a storage space of the motor vehicle at least in part, the trim component (28) comprising at least one receiving element (38) which protrudes through a corresponding receiving opening (40) in the bodyshell component (12), in which receiving element the one-piece fastening element (32) which protrudes through the receiving opening (40) is received at least in part, thus fixing the trim component (28) to the bodyshell component (12) by means of the receiving element (38).

2. A panel (10) according to claim 1,
**characterised in that**
the fastening element (32) is engaged with the trim component (28).

3. A panel (10) according to either claim 1 or 2,
**characterised in that**
the trim component (28) is connected to the bodyshell component (12) with an interlocking and/or force fit by means of the receiving element (38).

4. A panel (10) according to any of the preceding claims,
**characterised in that**
the receiving element (38) reaches behind at least one wall region (48) of the bodyshell component (12) which defines the receiving opening (40) at least in part.

5. A panel (10) according to any of the preceding claims,
**characterised in that**
the trim component (28) is made of plastic.

6. A panel (10) according to any of the preceding claims,
**characterised in that**
the fastening element (32) is made of plastic.

7. A motor vehicle, in particular a passenger vehicle, comprising a panel (10) according to any of the preceding claims.

## Revendications

1. Clapet (10) destiné à un véhicule comprenant au moins un composant préformé (12), au moins une partie d'habillage (14, 28) maintenue sur le composant préformé (12), et revêtant le composant préformé (12) au moins par zones, ainsi qu'au moins un élément de fixation (20, 32) monté sur la partie d'habillage (14, 28) sur lequel peut être fixé un élément d'accouplement par l'intermédiaire duquel un élément de recouvrement du véhicule peut être déplacé avec le clapet (10) lors d'un déplacement de ce clapet,
**caractérisé en ce que**
le clapet (10) est réalisé sous la forme d'un couvercle de volume de coffre, en particulier de coffre arrière pour pouvoir fermer au moins partiellement un volume de rangement du véhicule, la partie d'habillage (28) comprenant au moins un élément de réception (38) traversant une ouverture de réception correspondante (40) du composant préformé (12), dans lequel l'élément de fixation (32) en une seule pièce et traversant l'ouverture de réception (40) est logé au moins partiellement par fixation de la partie d'habillage (28) par l'intermédiaire de l'élément de réception (38), sur le composant préformé (12).

2. Clapet (10) conforme à la revendication 1,
**caractérisé en ce que**
l'élément de fixation (32) est encliqueté avec la partie d'habillage (28).

3. Clapet (10) conforme à l'une des revendications 1 et 2,
**caractérisé en ce que**
la partie d'habillage (28) est reliée par une liaison par la forme et/ou par une liaison par la force avec le composant préformé (12) par l'intermédiaire de l'élément de réception (38).

4. Clapet (10) conforme à l'une des revendications précédentes,
**caractérisé en ce que**
l'élément de réception (38) vient en prise à l'arrière d'au moins une zone de paroi (48) du composant préformé (12) délimitant au moins partiellement l'ouverture de réception (40).

5. Clapet (10) conforme à l'une des revendications 1 et 2,
**caractérisé en ce que**
la partie d'habillage (28) est réalisée en un matériau synthétique.

6. Clapet (10) conforme à l'une des revendications précédentes, **caractérisé en ce que**
l'élément de fixation (32) est réalisé en un matériau synthétique.

7. Véhicule, en particulier véhicule de tourisme équipé d'un clapet (10) conforme à l'une des revendications précédentes.
